# EUROPEAN PATENT SPECIFICATION

(11) **EP 3 275 810 B1**
(45) Date of publication and mention of the grant of the patent: **18.09.2019**
(21) Application number: 17182377.6
(22) Date of filing: 20.07.2017
(51) Int. Cl.: B65G 1/04, B65G 1/137, B65G 49/06, B65G 1/00

(54) **CONVEYOR CARRIAGE FOR SHEET-LIKE ELEMENTS, APPARATUS AND METHOD FOR THE MANAGEMENT OF A WAREHOUSE OF SHEET-LIKE ELEMENTS COMPRISING SAID CARRIAGE**
WAGEN EINES FÖRDERERS FÜR SCHEIBENELEMENTEN, VERWALTUNGSVORRICHTUNG SOWIE VERWALTUNGSVERFAHREN FÜR SCHEIBENELEMENTENLAGER MIT EINEM SOLCHEN WAGEN
CHARIOT D'UN CONVOYEUR POUR ÉLÉMENTS EN FEUILLES, APPAREIL ET PROCÉDÉ DE GESTION D'ENTREPÔT D'ÉLÉMENTS EN FEUILLES COMPORTANT UN TEL CHARIOT

(30) Priority: 25.07.2016 IT 201600077940
(43) Date of publication of application: 31.01.2018
(73) Proprietor: Movetro S.r.l., 35040 Ponso (PD) (IT)
(72) Inventor: MISTRELLO, Giorgio, 35040 Ponso (PD) (IT)
(74) Representative: Susanetto, Carlo

(56) References cited:
- DE-A1- 19 636 470
- US-A- 5 542 805

## Description

### Technical field

The present invention relates to a conveyor carriage for sheet-like elements having the features stated in the preamble of the main claim. Said invention also relates to an apparatus for managing a warehouse for sheet-like elements and to a method for forming a mixed package of sheet-like elements from a warehouse of homogenous packages of sheet-like elements.

### Technological background

The present invention is preferably applicable, although not exclusively, to the field of moving different types of sheet-like elements inside warehouses.

In particular, the sheet-like elements are preferably sheets of glass, but the invention is likewise also applicable to sheets of different materials, for example marble, metal, wood or plastics or composite material.

Warehouses that are intended for storing sheet-like elements and comprise a plurality of storage frames, on each of which a corresponding package of sheet-like elements can be arranged, are known.

In general, the sheet-like elements of a package supported on a storage frame are identical, or in other words are of the same type, and the package formed by said sheet-like elements is referred to as "homogeneous".

Generally speaking, each package of sheet-like elements can be of a different type to another package of sheet-like elements, and many different types of related packages are often stored inside the warehouse, for example hundreds or thousands of different types of sheet-like elements.

The type of sheet-like element can in fact be identified by the combination of any features of the sheet-like element, for example the dimensions (width, length, thickness, each independently of one another), the material, the colour, the finish and the quality.

Within these warehouses, there is sometimes the need to form a package of sheet-like elements known as a "mixed" package, i.e. a package formed by various types of sheet-like elements that generally have to be picked up from packages arranged in different positions inside the warehouse.

This procedure is typically substantially carried out by hand, whereby a sheet-like element is picked up from the homogeneous packages in the warehouse one at a time, and the mixed package is formed in a zone for shipping the package.

This procedure is, however, very slow, also as a result of the sizeable dimensions of the warehouses and the large number of possible types of sheet-like elements in said warehouses.

This drawback is therefore particularly undesirable in the field of distributing sheet-like elements, in which the formation, packaging and shipping of packages containing a predefined sequence of sheet-like elements that are generally different from one another, are provided for.

In this field, there is therefore a strong need to provide an automated system for forming a mixed package of sheet-like elements from a warehouse comprising homogenous packages of sheet-like elements both quickly and efficiently.

In a different field, that of processing the sheets of glass, conveyor carriages are known that are provided with a gripping device comprising suction cups for picking up an individual sheet of glass from a support frame of a warehouse, to transport said glass to an operating machine (for example a machine for cutting the sheet) and to unload it onto the machine.

Document US 5542805 A discloses a conveyor carriage, an apparatus for the management of a warehouse and a method for forming a mixed package of sheet-like elements according to the preamble of claims 1, 9 and 14 respectively.

### Definitions

"Sheet-like element" means an object having a main bi-dimensional extension, whereby the width and length are at least one order of magnitude greater than the thickness.

By way of example, sheet-like elements to which the present invention is well suited are between 0.5 and 10 metres wide and long, and between 2 mm and 150 mm thick.

"Package of sheet-like elements" means a plurality of sheet-like elements. "Homogeneous package of sheet-like elements" means a package formed by the same type of sheet-like elements, that is to say that, for every feature of the sheet-like element to be classified (for example dimensions, colour, finish, material, quality, etc.), all the sheet-like elements have the same values.

"Mixed package" means a package formed of sheet-like elements, in which there are at least two different types of elements.

### Desclosure of the invention

A first object of the present invention is to produce an apparatus for managing a warehouse of sheet-like elements, the structure and function of which are designed to overcome the limits set out above with reference to the cited prior art.

In particular, the present invention intends to provide a conveyor carriage that can form mixed packages of sheet-like elements both rapidly and efficiently.

Another object of the present invention is to provide a method for forming mixed packages of sheet-like elements from a warehouse of homogenous packages of sheet-like elements, which method makes it possible to speed up the procedure of forming the mixed package.

Another object of the invention is to increase the flexibility of the system for managing the warehouse.

Another object of the invention is to produce an apparatus for managing the warehouse, which apparatus can rapidly form mixed packages with considerably less manual input.

These and other objects are achieved by the present invention by means of a conveyor carriage, an apparatus and a method formed in accordance with the claims that follow.

### Brief description of the drawings

The features and advantages of the invention will be more apparent from the detailed description of a few preferred embodiments thereof, shown by way of non-restrictive example with reference to the accompanying drawings, in which:
- Fig. 1 is a perspective front view of a first example of a conveyor carriage for sheet-like elements, formed according to the present invention,
- Fig. 2 is a perspective rear view of the conveyor carriage of Fig. 1,
- Fig. 3 is a schematic lateral view of the conveyor carriage of Fig. 1,
- Fig. 4 to 10 are schematic views of the conveyor carriage of Fig. 1 during various steps of operation inside a warehouse of sheet-like elements,
- Fig. 11 is a perspective rear view of a second example of the conveyor carriage for sheet-like elements, formed according to the present invention,
- Fig. 12 is a schematic lateral view of the conveyor carriage of Fig. 11, and
- Fig. 13 to 17 are schematic lateral views of the conveyor carriage of Fig. 11 during various steps of operation inside a warehouse of sheet-like elements.

### Preferred embodiments of the invention

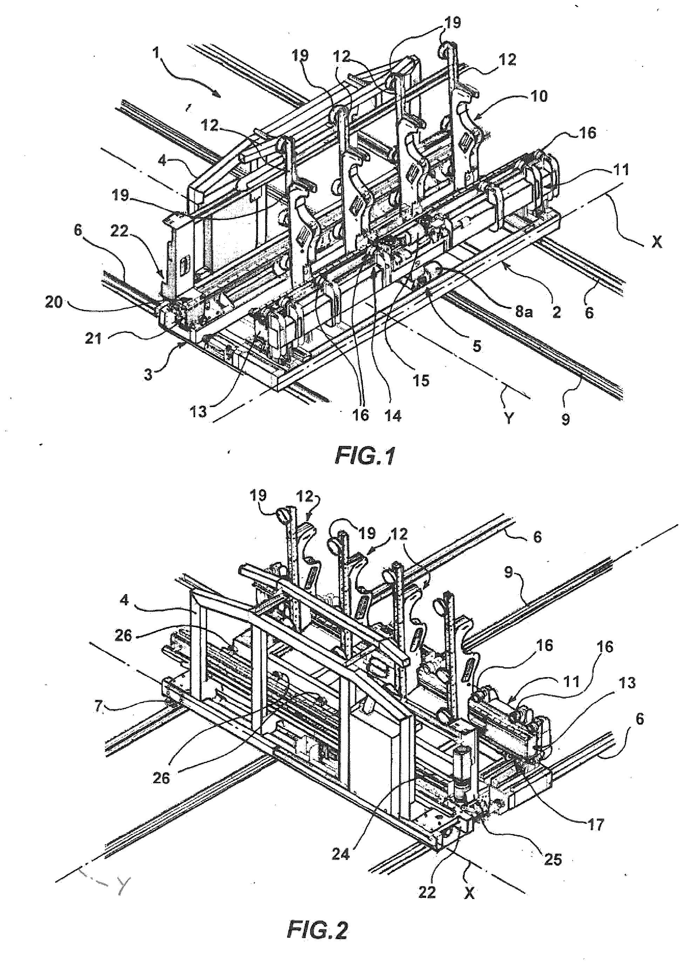

With reference to Fig. 1 to 3 first, reference numeral 1 indicates a first example of the conveyor carriage as a whole, formed in accordance with the present invention.

The conveyor carriage 1 comprises a bearing structure 2, which extends longitudinally in an working direction X and supports at least one package of sheet-like elements 100, described in more detail hereinafter.

The bearing structure 2 comprises a base 3 and a back 4 extending vertically from the base 3.

The conveyor carriage 1 comprises a movement device 5 for driving and guiding the movement of the conveyor carriage 1 in a conveying direction Y, which is defined by tracks 6 on which the carriage 1 is supported by means of wheels 7 that are mounted on the base 3 of the bearing structure 2.

The movement device 5 comprises a toothed wheel 8 that is rotated by a motor 8a and meshes with a rack 9 that extends in parallel with the tracks 6 in the conveying direction Y.

The conveying direction Y is substantially perpendicular to the working direction X.

The conveyor carriage 1 also comprises a gripping device 10 and a first frame transfer device 20, both of which are mounted on the bearing structure 2.

The gripping device 10 is provided to pick up individual sheet-like elements from packages of sheet-like elements.

The gripping device 10 comprises a base 11 and a plurality of arms 12 extending approximately perpendicularly from a horizontal supporting beam 13, which is mounted on the base 11 such that it can slide in the working direction X, preferably on both sides of the base 11, on account of a rack mechanism 14 controlled by a motor 15 and of the provision of guide rollers 16.

The base 11 of the gripping device 10 is mounted on the base 3 of the bearing structure 2 so as to be movable in the conveying direction Y on account of a rack mechanism 17 controlled by a motor 18.

Each arm 12 is provided with suction cups 19, which are spaced apart from one another and preferably connected to a suction system so as to be attachable to a sheet-like element.

Each arm 12 can also preferably oscillate about an axis that is parallel to the working direction X in order to facilitate the process of gripping and releasing the sheet-like element by means of the suction cups 19.

The first frame transfer device 20 is placed between the back 4 and the gripping device 10 and is provided to load and subsequently unload an auxiliary supporting frame 30 onto/from the bearing structure 2, as described hereinafter.

The first frame transfer device 20 comprises a coupling member 21, which couples and uncouples the auxiliary supporting frame 30, and a driving member 22 provided to move the auxiliary supporting frame 30 in the working direction X from and towards the bearing structure 2.

The coupling member 21 comprises a pin 23, the extension of which can be controlled, and which is capable of coupling a suitable hole or seat in the auxiliary frame 30, while the driving member 22 comprises a rack mechanism 24 controlled by a motor 25 for moving the coupling member 21 along the base 3 of the bearing structure 2 in parallel with the working direction X.

The first frame transfer device 20 also comprises a plurality of guide rollers 26, which are arranged on the base 3 of the bearing structure 2 in parallel with the working direction X, and support and guide the sliding movement of the auxiliary supporting frame 30 on the bearing structure 2.

The gripping device 10 and the first frame transfer device 20 are substantially parallel to one another and to the working direction X, said devices facing one another and being moveable towards one another or away from one another on account of the ability of the gripping device 10 to slide in the conveying direction Y.

The conveyor carriage 1 is preferably used in an apparatus 50 for managing a warehouse 51 of sheet-like elements 100.

The sheet-like elements 100 are, for example, sheets of glass, but may be sheets of any other material capable of being stored in a warehouse and being handled.

The sheet-like elements 100 are stored in the warehouse 51 in homogenous packages 101, each of which is supported on a storage frame 52.

The sheet-like elements 100 forming a homogenous package 101 can be of a different type to the sheet-like elements 100 forming another homogenous package 101, such that different storage frames 52 generally support different types of homogenous packages 101.

All the storage frames 52 are parallel to the working direction X and are arranged one behind the other in the conveying direction Y.

The storage frames 52 can be designed to support homogenous packages on several levels, in which case the gripping device 10 will be suitably provided to be able to pick up a sheet-like element on any of the levels available.

The storage frames 52 are preferably arranged in adjacent rows 53.

The tracks 6 along which the conveyor carriage 1 is moved in the conveying direction Y are arranged next to the storage frames 52, preferably between two rows 53.

The apparatus 50 also comprises a shipping zone 54, in which one or more auxiliary frames 30 are provided that can either be empty or loaded with a package of sheet-like elements 100 that is temporarily stored here before leaving the warehouse 51.

The auxiliary support frames 30 can be designed to support packages of sheet-like elements on several levels, in which case the gripping device 10 will be suitably provided to be able to position a sheet-like element on any of the levels available.

In this first embodiment, the storage frames 52 are mounted on a classifier 55, inside which each storage frame 52 can move in the conveying direction Y to a limited extent.

In this way, two successive storage frames 52 can be moved towards one another so as to minimise the spacing therebetween, thus increasing the capacity of the warehouse 51, or can be moved away from one another by a predefined amount so as to create a space therebetween that is large enough for the gripping device 10 of the conveyor carriage 1 to be inserted therein.

In particular, the storage frames 52 can be moved so as to be able to create said space between any pair of storage frames.

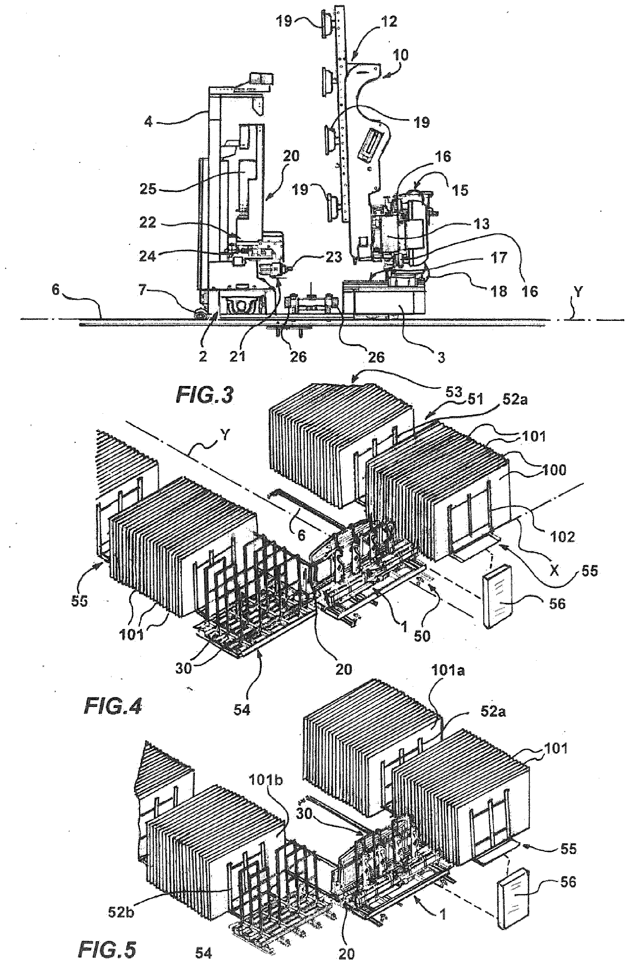

The apparatus 50 also comprises a control unit 56, which controls the activity of the conveyor carriage 1 and the movement of the storage frames 52, according to the embodiments described below with reference to Fig. 4 to 10.

The sheet-like elements 100 required for forming a mixed package 102 to be shipped are indicated in the control unit 56, for example directly by an operator or by a shipping program. The sheet-like elements that form the mixed package 102 comprise a first sheet-like element 100a and a second sheet-like element 100b that is different from the first sheet-like element 100a, which elements belong to a first homogenous package 101a and to a second homogeneous package 101b, respectively, positioned on respective support frames 52a and 52b. The positions of the support frames 52a and 52b are known to the control unit 56.

The conveyor carriage 1 is first moved by the control unit 56, by means of the movement device 5, to the shipping zone 54 (Fig. 4), where, by actuating the first frame transfer device 20, it loads an empty auxiliary supporting frame 30 onto the bearing structure 2 (Fig. 5). In particular, the auxiliary supporting frame 30 is coupled by the coupling member 21 and is then driven in the working direction X on the base 3, bearing on the guide rollers 26, by the driving member 22.

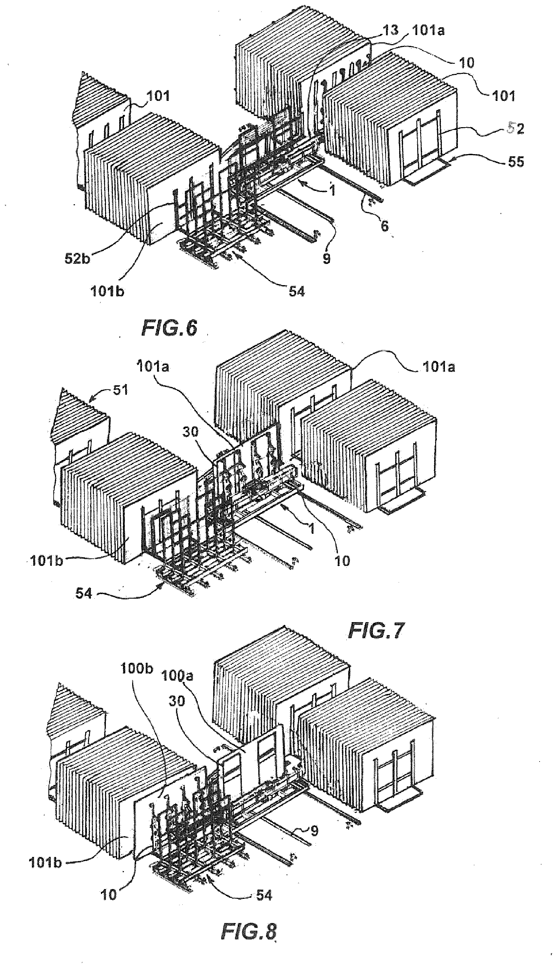

The conveyor carriage 1 is then moved in the conveying direction Y to the storage frame 52a, where the control unit 56, for example by moving the storage frames 52 downstream of the storage frame 52a, has created a space into which the gripping device 10 is introduced, moving the support beam 13 in a translational manner in the working direction X (Fig. 6).

The arms 12 are then actuated to pick up the first sheet-like element 100a from the first homogenous package 101a by means of the suction cups 19 and, after having returned the support beam 13 to the starting position, the first sheet-like element 100a is placed on the auxiliary supporting frame 30 placed on the conveyor carriage 1 (Fig. 7).

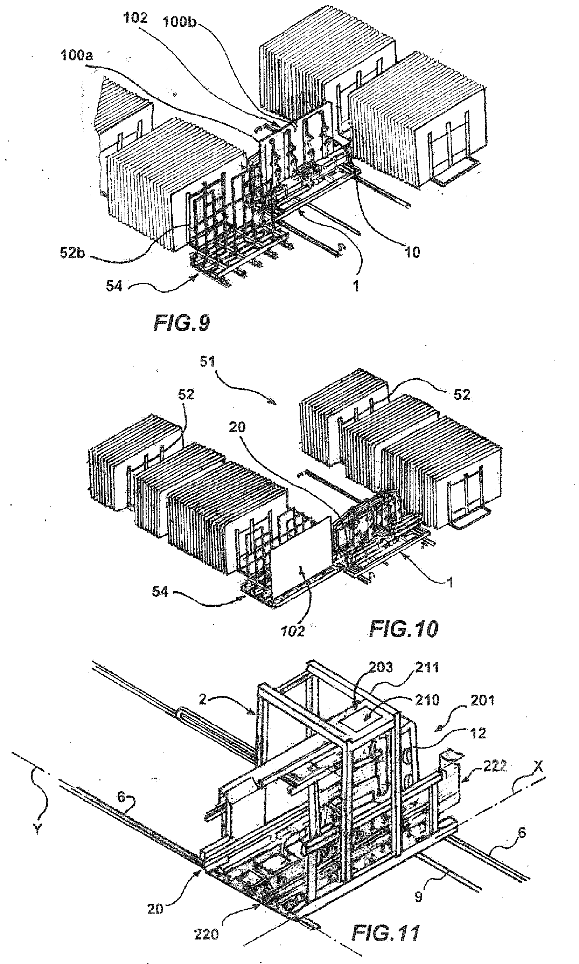

The conveyor carriage 1 is subsequently moved in the conveying direction Y to the storage frame 52b, where, in a similar manner to that described above, the gripping device 10 picks up the second sheet-like element 100b from the second homogenous package 101b (Fig. 8), and places it on the auxiliary supporting frame 30, on top of the first sheet-like element 100a (Fig. 9). It will be appreciated that this step of forming the mixed package 101 can continue in the same way until all the sheet-like elements required to form said package have been loaded onto the auxiliary frame 30.

At the end of this step, the conveyor carriage 1 is moved to the shipping zone 54 and the auxiliary supporting frame 30 on which the mixed package 102 is placed is unloaded from the conveyor carriage 1 in the shipping zone 54 in order to be shipped from the warehouse 51 at a later point (Fig. 10).

Due to the features of the conveyor carriage 1, by implementing the method according to the invention, the apparatus 50 is able to automatically form a mixed package of sheet-like elements and, in particular, to form this package quickly. In fact, the mixed package is formed directly on the conveyor carriage 1 as a result of the fact that the auxiliary supporting frame 30 can be loaded thereon. In this way, the movement times of the conveyor carriage 1 are substantially limited to the distance between the storage frames on which the sheet-like elements to be loaded are present, without the need therefore to return to the shipping zone each time a single element is picked up in order to form the package.

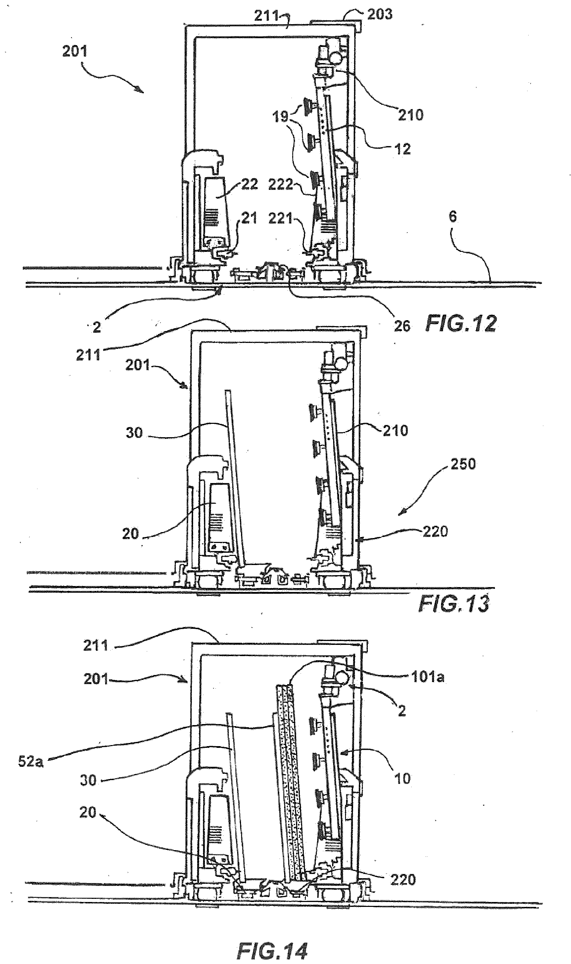

Fig. 11 and 12 show a second embodiment of the conveyor carriage, indicated by reference numeral 201, in which details similar to those of the conveyor carriage 1 are indicated by the same reference numerals.

The conveyor carriage 201 differs from the conveyor carriage 1 in that it comprises a second frame transfer device, indicated by reference numeral 220, which is adjacent to the first frame transfer device 20.

The second frame transfer device 220 is provided to load (and then unload) a storage frame 52 onto (from) the bearing structure 2. Similarly to the first frame transfer device 20, the second frame transfer device 220 comprises a coupling member 221 and a driving member 222 for this purpose.

The conveyor carriage 201 also comprises a gripping device 210, which, instead of being mounted on the base 3 of the bearing structure 2 like the gripping device 10, is mounted on a roof 211 of the bearing structure 2 so as to be slidable in the conveying direction Y from and towards the first 20 and the second 220 frame transfer device.

In this case, the arms 12 of the gripping device 210 extend substantially vertically towards the bottom from a base 211 that is hanging from the roof 211. In the embodiment shown here, the gripping device 210 cannot move in the working direction X.

The remaining features of the conveyor carriage 201 are the same as those of the conveyor carriage 1.

The conveyor carriage 201 is preferably used in an apparatus 250 for managing a warehouse, in which the homogeneous packages 101 are placed on storage frames that are similar to the storage frames 52 but can move in the working direction X so as to be laterally extractable from the row of storage frames.

In this case, the storage frames cannot move in the conveying direction Y.

With reference to Fig. 13 to 17, the operation of the apparatus 250 provides that the conveyor carriage 201 is first moved to the distribution zone 54 in which it loads an empty auxiliary frame 30 (Fig. 13), and is then moved to the storage frame 52a corresponding to the first homogenous package 101a.

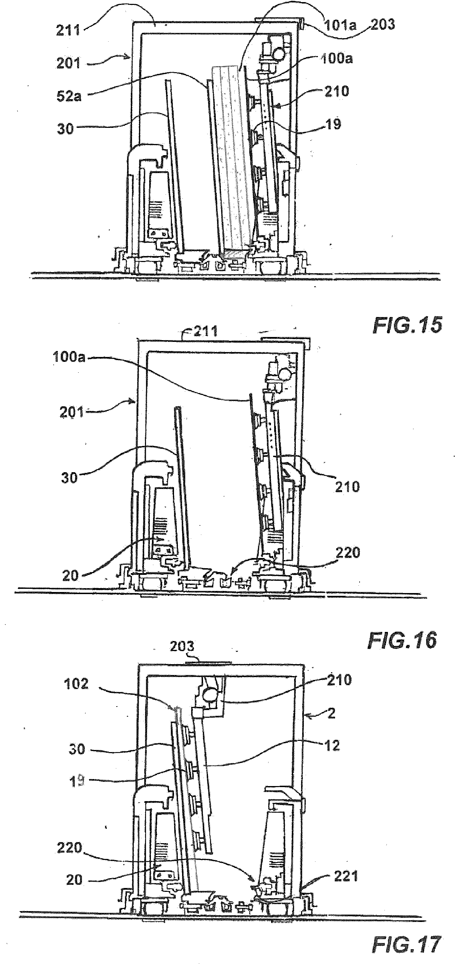

Here, the storage frame 52a is coupled and loaded onto the bearing structure 2 by means of the second frame transfer device 220, and is positioned opposite the gripping device 210 (Fig. 14), which provides for the first sheet-like element 100a to be picked up from the first homogenous package 101a (Fig. 15).

The storage frame 52a is then unloaded from the conveyor carriage 201 by means of the second frame transfer device 220 and is returned to its original position in the warehouse 251 (Fig. 16).

The gripping device 210 is then moved towards the auxiliary supporting frame 30 where it releases the first sheet-like element 100a (Fig. 17).

The formation of the mixed package 102 continues with repetition of the steps set out above for each sheet-like element needed to assemble the mixed package 102.

At the end of the formation step, the auxiliary supporting frame 30 is unloaded at the shipping zone 54 by the first frame transfer device 20.

## Claims

1. Conveyor carriage (1, 201) for sheet-like elements (100), comprising:
- a bearing structure (2), extending along a working direction (X) and designed to support a package (102) of said sheet-like elements,
- a movement device (5) arranged to actuate and guide the displacement of said conveyor carriage along a conveying direction (Y),
- a gripping device (10, 210), associated with said bearing structure and arranged to pick up individual sheet-like elements from packages of sheet-like elements, and to load them in succession on to said bearing structure, **characterised in that** it comprises a first frame transfer device (20), which in turn comprises:
- a coupling member (21) arranged to couple and uncouple an auxiliary supporting frame (30), as well as
- a driving member (22) arranged to move said auxiliary supporting frame along said working direction towards and away from said bearing structure,
in such a way as to load said auxiliary supporting frame (30) on to said bearing structure, so that the individual sheet-like elements (100a; 100b) picked up by said gripping device (10) can be rested on said auxiliary supporting frame forming said package of sheet-like elements, and in such a way as to unload said auxiliary supporting frame, together with said package of sheet-like elements, from said bearing structure.

2. Carriage according to claim 1, wherein said first frame transfer device (20) comprises a plurality of guide rollers (26) for causing said auxiliary supporting frame to slide on said bearing structure.

3. Carriage according to claim 1 or 2, wherein said gripping device (10) is positioned essentially parallel to said first frame transfer device (20).

4. Carriage according to any one of the preceding claims, wherein said gripping device comprises at least one arm (12) equipped with suction cups (19).

5. Carriage according to claim 4, wherein said at least one arm (12) is movable along said conveying direction towards and away from said first frame transfer device.

6. Carriage according to any one of the preceding claims, wherein a second frame transfer device (220) is also provided, adjacent to said first frame transfer device (20).

7. Carriage according to any one of claims 4 to 6, wherein said at least one arm extends upwards from a supporting beam (13) capable of sliding along said working direction (X) towards and away from said bearing structure (2).

8. Carriage according to any one of claims 4 to 6, wherein said at least one arm is extended downwards from a roof (211) of said bearing structure.

9. Apparatus (50, 250) for the management of a warehouse (51, 251) of sheet-like elements, comprising:
- a plurality of storage frames (52), each storage frame being arranged to support at least one homogeneous package (101) of sheet-like elements;
- at least one auxiliary supporting frame (30),
- at least one conveyor carriage movable between said plurality of storage frames and a dispatch zone (54), in which packages (102) of sheet-like elements are stored temporarily before being dispatched from said warehouse,
**characterised in that** said conveyor carriage is made according to any one of claims 1 to 8, and is arranged to load said auxiliary supporting frame (30), to form on said auxiliary supporting frame a mixed package (102) of sheet-like elements taken from at least two of said homogeneous packages (101) of sheet-like elements, and to unload said auxiliary supporting frame with said mixed package (102) of sheet-like elements in said dispatch zone.

10. Apparatus according to claim 9, wherein said plurality of storage frames are parallel to a working direction (X) and are arranged in succession along a conveying direction (Y), said conveying carriage being movable along said conveying direction beside said plurality of storage frames.

11. Apparatus according to claim 10, wherein said storage frames (52) are limitedly movable along said conveying direction (Y), in such a way as to create, between successive storage frames, a space sufficient to allow the insertion between the same of a gripping device (10) of said conveyor carriage, arranged to pick up a single sheet-like element from one of said successive storage frames.

12. Apparatus according to claim 10, wherein said storage frames are movable along said working direction (X) in order to be extracted from said warehouse and loaded on to said conveyor carriage.

13. Apparatus according to any one of claims 10 to 12, wherein a control unit (56) of said conveyor carriage is provided for controlling the displacement of said conveyor carriage between said plurality of storage frames, the picking-up of the sheet-like elements forming said mixed package (102), and the loading and unloading of said auxiliary supporting frame (30).

14. Method for forming a mixed package (102) of sheet-like elements (100) from a warehouse (51, 251) of homogeneous packages (101) of sheet-like elements, comprising the steps of:
- providing a conveyor carriage (1, 201) capable of moving along said warehouse, said carriage being equipped with a gripping device (10) for picking up an individual sheet-like element from one of said homogeneous packages of sheet-like elements, **characterized in that**, it comprises the steps of:
- providing a first frame transfer device (20) arranged to load on to said carriage and to transport and unload from said carriage an auxiliary supporting frame (30),
- transferring on to said conveyor carriage an auxiliary supporting frame (30) by means of said first frame transfer device,
- picking up at least a first sheet-like element (100a) from a first homogeneous package (101a) of sheet-like elements positioned in said warehouse, and supporting said element on said auxiliary supporting frame,
- moving said conveyor carriage along said warehouse,
- picking up at least a second sheet-like element (100b) from a second homogeneous package (101b) of sheet-like elements, different from said first package, positioned in said warehouse, and supporting said element on said auxiliary supporting frame, so as to form a mixed package (102) of sheet-like elements;
- moving said conveyor carriage into a dispatch zone (54),
- unloading from said conveyor carriage said auxiliary supporting frame (30) with said mixed package (102) of sheet-like elements in said dispatch zone.

15. Method according to claim 14, wherein said warehouse comprises a plurality of storage frames (52) parallel to each other and to a working direction (X) and arranged in succession along a conveying direction (Y), said frames being limitedly movable along said conveying direction (Y), said method comprising the steps of:
- moving successive storage frames to create a space between them,
- inserting said gripping device (20) into said space, and
- picking up said first or second sheet-like element (100a, 100b) by means of said gripping device (20).

16. Method according to claim 14, wherein said warehouse comprises a plurality of storage frames (52) parallel to each other and to a working direction (X) and arranged in succession along a conveying direction (Y), said frames being movable along said conveying direction (X), said method comprising the steps of:
- loading a storage frame (52a) from said first homogeneous package (101a) on to said conveyor carriage by means of a second frame transfer device (220),
- picking up said first sheet-like element (100a) from said first homogeneous package by means of said gripping device,
- unloading said storage frame (52a) of said first homogeneous package from said conveyor carriage,
- placing said first sheet-like element (100a) on to said auxiliary supporting frame (30),
- moving the conveyor carriage to a storage frame (52b) of said second homogeneous package (101b) and repeating the preceding steps in order to pick up said second sheet-like element (100b) and place it on said auxiliary supporting frame (30).

## Patentansprüche

1. Förderschlitten (1, 201) für plattenförmige Elemente (100), umfassend:
- eine Tragstruktur (2), die sich entlang einer Arbeitsrichtung (X) erstreckt, und ausgebildet ist, um einen Stapel (102) von plattenförmigen Elementen zu stützen,
- eine Bewegungsvorrichtung (5), die angeordnet ist, um die Verschiebung des Förderschlittens entlang einer Förderrichtung (Y) zu aktivieren und zu führen,
- eine Greifvorrichtung (10, 210), die mit der Tragstruktur verbunden ist, und angeordnet ist, um einzelne plattenförmige Elemente von Stapeln von plattenförmigen Elementen zu ergreifen und nacheinander auf die Tragstruktur zu laden,
- **dadurch gekennzeichnet, dass** er eine erste Rahmenübergabevorrichtung (20) aufweist, die wiederum aufweist:
- ein Kopplungselement (21), das angeordnet ist, um einen Hilfsstützrahmen (30) zu koppeln und zu entkoppeln, sowie
- ein Antriebselement (22), das angeordnet ist, um den Hilfsstützrahmen entlang der Arbeitsrichtung zur Tragstruktur und weg von dieser in der Weise zu bewegen, um den Hilfsstützrahmen (30) auf die Tragstruktur zu laden, sodass die einzelnen plattenförmigen Elemente (100a; 100b), die durch die Greifvorrichtung (10) ergriffen werden, auf dem Hilfsstützrahmen, der den Stapel von plattenförmigen Elementen bildet, aufgelegt werden können, und in der Weise, um den Hilfsstützrahmen zusammen mit dem Stapel von plattenförmigen Elementen von der Tragstruktur zu entladen.

2. Schlitten gemäß Anspruch 1, wobei die erste Rahmenübergabevorrichtung (20) eine Mehrzahl von Führungsrollen (26) aufweist, um zu bewirken, dass der Hilfsstützrahmen auf der Tragstruktur gleitet.

3. Schlitten gemäß Anspruch 1 oder 2, wobei die Greifvorrichtung (10) im Wesentlichen parallel zur ersten Rahmenübergabevorrichtung (20) positioniert ist.

4. Schlitten gemäß einem der vorhergehenden Ansprüche, wobei die Greifvorrichtung zumindest einen Arm (12) aufweist, der mit Saugnäpfen (19) versehen ist.

5. Schlitten gemäß Anspruch 4, wobei der zumindest eine Arm (12) entlang der Förderrichtung zur ersten Rahmenübergabevorrichtung und weg von dieser beweglich ist.

6. Schlitten gemäß einem der vorhergehenden Ansprüche, wobei eine zweite Rahmenübergabevorrichtung (220) ebenfalls benachbart zur ersten Rahmenübergabevorrichtung (20) vorgesehen ist.

7. Schlitten gemäß einem der Ansprüche 4 bis 6, wobei sich der zumindest eine Arm von einem Stützbalken (13) nach oben erstreckt, der in der Lage ist, entlang der Arbeitsrichtung (X) zur Tragstruktur (2) oder weg von dieser zu gleiten.

8. Schlitten gemäß einem der Ansprüche 4 bis 6, wobei sich der zumindest eine Arm von einem Dach (211) der Tragstruktur nach unten erstreckt.

9. Vorrichtung (50, 250) zur Verwaltung eines Lagers (41, 251) von plattenförmigen Elementen, umfassend:
- eine Mehrzahl von Lagerrahmen (52), wobei jeder Lagerrahmen angeordnet ist, um zumindest einen gleichartigen Stapel (101) von plattenähnlichen Elementen zu stützen;
- zumindest einen Hilfsstützrahmen (30);
- zumindest einen Förderschlitten, der zwischen der Mehrzahl von Lagerrahmen und einem Versandbereich (54) beweglich ist, in dem die Stapel (102) von plattenähnlichen Elementen vorübergehend gelagert werden, bevor sie vom Lager versandt werden;
- **dadurch gekennzeichnet, dass** der Förderschlitten gemäß einem der Ansprüche 1 bis 8 hergestellt ist, und angeordnet ist, um den Hilfsstützrahmen (30) zu laden, um auf dem Hilfsstützrahmen einen gemischten Stapel (102) von plattenähnlichen Elementen zu bilden, die von zumindest zwei gleichartigen Stapeln (102) von plattenähnlichen Elementen entnommen werden, und um den Hilfsstützrahmen mit dem gemischten Stapel (102) von plattenähnlichen Elementen im Versandbereich zu entladen.

10. Vorrichtung gemäß Anspruch 9, wobei die Mehrzahl von Lagerrahmen zu einer Arbeitsrichtung (X) parallel ist und nacheinander entlang einer Förderrichtung (Y) angeordnet ist, wobei der Förderschlitten entlang der Förderrichtung neben der Mehrzahl von Lagerrahmen beweglich ist.

11. Vorrichtung gemäß Anspruch 10, wobei die Lagerrahmen (52) entlang der Förderrichtung (Y) in der Weise begrenzt beweglich sind, um zwischen aufeinanderfolgenden Lagerrahmen einen Raum zu erzeugen, der ausreichend ist, um das Einsetzen zwischen derselben Greifvorrichtung (10) des Förderschlittens zu ermöglichen, die angeordnet ist, um ein einzelnes plattenähnliches Element von einem der aufeinanderfolgenden Lagerrahmen zu ergreifen.

12. Vorrichtung gemäß Anspruch 10, wobei die Lagerrahmen entlang der Arbeitsrichtung (X) beweglich sind, um vom Lager entnommen und auf den Förderschlitten geladen zu werden.

13. Vorrichtung gemäß einem der Ansprüche 10 bis 12, wobei eine Steuereinheit (56) des Förderschlittens zum Steuern der Verschiebung des Förderschlittens zwischen der Mehrzahl von Lagerrahmen, des Ergreifens der plattenähnlichen Elemente, die den gemischten Stapel (102) bilden, und des Ladens und Entladens des Hilfsstützrahmens (30) vorgesehen ist.

14. Verfahren zum Bilden eines gemischten Stapels (102) von plattenähnlichen Elementen (100) von einem Lager (51, 251) von gleichartigen Stapeln (101) von plattenähnlichen Elementen mit den Schritten:
- Vorsehen eines Förderschlittens (1, 201), der in der Lage ist, sich entlang des Lagers zu bewegen, wobei der Schlitten mit einer Greifvorrichtung (10) zum Ergreifen eines einzelnen plattenähnlichen Elements von einem der gleichartigen Stapeln von plattenähnlichen Elementen versehen ist, **dadurch gekennzeichnet, dass** es die Schritte aufweist:
- Vorsehen einer ersten Rahmenübergabevorrichtung (20), die angeordnet ist, um einen Hilfsstützrahmen (30) auf den Schlitten zu laden und zu transportieren und vom Schlitten zu entladen;
- Übergeben eines Hilfsstützrahmens (30) mittels der ersten Rahmenübergabevorrichtung auf den Förderschlitten;
- Ergreifen von zumindest einem ersten plattenähnlichen Element (100a) von einem ersten gleichartigen Stapel (101a) von plattenähnlichen Elementen, der im Lager positioniert sind, und Stützen des Elements auf dem Hilfsstützrahmen;
- Bewegen des Förderschlittens entlang des Lagers;
- Ergreifen von zumindest einem zweiten plattenähnlichen Element (100b) von einem zweiten gleichartigen Stapel (101b) von plattenähnlichen Elementen, der sich vom ersten Stapel unterscheidet, der im Lager positioniert ist, und Stützen des Elementes auf dem Hilfsstützrahmen, um so einen gemischten Stapel (102) von plattenähnlichen Elementen zu bilden;
- Bewegen des Förderschlittens zu einem Versandbereich (54);
- Entladen des Hilfsstützrahmens (30) mit dem gemischten Stapel (102) von plattenähnlichen Elementen vom Förderschlitten im Versandbereich.

15. Verfahren gemäß Anspruch 14, wobei das Lager eine Mehrzahl von Lagerrahmen (52) aufweist, die parallel zueinander und zu einer Arbeitsrichtung (X) sind und nacheinander entlang einer Förderrichtung (Y) angeordnet sind, wobei die Rahmen entlang der Förderrichtung (Y) begrenzt beweglich sind, wobei das Verfahren die Schritte aufweist:
- Bewegen der aufeinanderfolgenden Lagerrahmen, um einen Raum zwischen ihnen zu erzeugen;
- Einsetzen der Greifvorrichtung (20) in den Raum, und
- Ergreifen des ersten oder zweiten plattenähnlichen Elements (100a, 100b) mittels der Greifvorrichtung (20);

16. Verfahren gemäß Anspruch 14, wobei das Lager eine Mehrzahl von Lagerrahmen (52) aufweist, die parallel zueinander und zu einer Arbeitsrichtung (X) sind und nacheinander entlang einer Förderrichtung (Y) angeordnet sind, wobei die Rahmen entlang der Förderrichtung (Y) beweglich sind, wobei das Verfahren die Schritte aufweist:
- Laden eines Lagerrahmens (52a) von einem ersten gleichartigen Stapel (101a) auf den Förderschlitten mittels einer zweiten Rahmenübergabevorrichtung (220);
- Ergreifen des ersten plattenähnlichen Elements (100a) vom ersten gleichartigen Stapel mittels der Greifvorrichtung;
- Entladen des Lagerrahmens (52a) des ersten gleichartigen Stapels vom Förderschlitten;
- Anordnen des ersten plattenähnlichen Elements (100a) auf dem Hilfsstützrahmen (30);
- Bewegen des Förderschlittens zu einem Lagerrahmen (52b) des zweiten gleichartigen Stapels (101b) und Wiederholen der vorhergehenden Schritte, um das zweite plattenähnliche Element (100b) zu ergreifen und auf dem Hilfsstützrahmen (30) anzuordnen.

## Revendications

1. Chariot de convoyeur (1, 201) pour éléments en feuille (100), comprenant :
- une structure d'appui (2), s'étendant le long d'une direction de travail (X) et conçue pour supporter un ensemble (102) desdits éléments en feuille,
- un dispositif de mise en mouvement (5) agencé pour actionner et guider le déplacement dudit chariot de convoyeur le long d'une direction d'acheminement (Y),
- un dispositif de saisie (10, 210), associé à ladite structure d'appui et agencé pour récupérer des éléments en feuille individuels des ensembles d'éléments en feuille, et pour les charger successivement sur ladite structure d'appui,
**caractérisé en ce qu'**il comprend un premier dispositif de transfert de châssis (20), qui comprend à son tour :
- un organe de couplage (21) agencé pour coupler et découpler un châssis de support auxiliaire (30), ainsi que
- un organe d'entraînement (22) agencé pour mettre en mouvement ledit châssis de support auxiliaire le long de ladite direction de travail vers ladite structure d'appui et à l'opposé de celle-ci, de manière à charger ledit châssis de support auxiliaire (30) sur ladite structure d'appui, de sorte que les éléments en feuille individuels (100a ; 100b) récupérés par ledit dispositif de saisie (10) puissent être posés sur ledit châssis de support auxiliaire formant ledit ensemble d'éléments en feuille, et de manière à décharger ledit châssis de support auxiliaire, ainsi que ledit ensemble d'éléments en feuille, de ladite structure d'appui.

2. Chariot selon la revendication 1, dans lequel ledit premier dispositif de transfert de châssis (20) comprend une pluralité de rouleaux de guidage (26) pour amener ledit châssis de support auxiliaire à coulisser sur ladite structure d'appui.

3. Chariot selon la revendication 1 ou 2, dans lequel ledit dispositif de saisie (10) est positionné essentiellement parallèlement audit premier dispositif de transfert de châssis (20).

4. Chariot selon l'une quelconque des revendications précédentes, dans lequel ledit dispositif de saisie comprend au moins un bras (12) équipé de ventouses (19).

5. Chariot selon la revendication 4, dans lequel ledit au moins un bras (12) est mobile le long de ladite direction d'acheminement vers ledit premier dispositif de transfert de châssis et à l'opposé de celui-ci.

6. Chariot selon l'une quelconque des revendications précédentes, dans lequel un second dispositif de transfert de châssis (220) est également prévu, de manière adjacente audit premier dispositif de transfert de châssis (20).

7. Chariot selon l'une quelconque des revendications 4 à 6, dans lequel ledit au moins un bras s'étend vers le haut depuis une poutre de support (13) capable de coulisser le long de ladite direction de travail (X) vers ladite structure d'appui (2) et à l'opposé de celle-ci.

8. Chariot selon l'une quelconque des revendications 4 à 6, dans lequel ledit au moins un bras s'étend vers le bas depuis un toit (211) de ladite structure d'appui.

9. Appareil (50, 250) pour la gestion d'un entrepôt (51, 251) d'éléments en feuille, comprenant :
- une pluralité de châssis de stockage (52), chaque châssis de stockage étant agencé pour supporter au moins un ensemble homogène (101) d'éléments en feuille ;
- au moins un châssis de support auxiliaire (30),
- au moins un chariot de convoyeur mobile entre ladite pluralité de châssis de stockage et une zone d'expédition (54), dans laquelle des ensembles (102) d'éléments en feuilles sont stockés temporairement avant d'être expédiés depuis ledit entrepôt,
**caractérisé en ce que** ledit chariot de convoyeur est fabriqué selon l'une quelconque des revendications 1 à 8, et est agencé pour charger ledit châssis de support auxiliaire (30), pour former sur ledit châssis de support auxiliaire un ensemble mixte (102) d'éléments en feuille pris d'au moins deux desdits ensembles homogènes (101) d'éléments en feuille, et pour décharger ledit châssis de support auxiliaire avec ledit ensemble mixte (102) d'éléments en feuille dans ladite zone d'expédition.

10. Appareil selon la revendication 9, dans lequel ladite pluralité de châssis de stockage sont parallèles à une direction de travail (X) et sont agencés successivement le long d'une direction d'acheminement (Y), ledit chariot de convoyeur étant mobile le long de ladite direction d'acheminement à côté de ladite pluralité de châssis de stockage.

11. Appareil selon la revendication 10, dans lequel lesdits châssis de stockage (52) sont mobiles de façon limitée le long de ladite direction d'acheminement (Y), de manière à créer entre des châssis de stockage successifs, un espace suffisant pour permettre l'insertion entre ceux-ci, d'un dispositif de saisie (10) dudit chariot de convoyeur, agencé pour récupérer un seul élément en feuille de l'un desdits châssis de stockage successifs.

12. Appareil selon la revendication 10, dans lequel lesdits châssis de stockage sont mobiles le long de ladite direction de travail (X) afin d'être extraits dudit entrepôt et chargés sur ledit chariot de convoyeur.

13. Appareil selon l'une quelconque des revendications 10 à 12, dans lequel une unité de commande (56) dudit chariot de convoyeur est prévue pour commander le déplacement dudit chariot de convoyeur entre ladite pluralité de châssis de stockage, la récupération des éléments en feuille formant ledit ensemble mixte (102), ainsi que le chargement et le déchargement dudit châssis de support auxiliaire (30).

14. Procédé de formation d'un ensemble mixte (102) d'éléments en feuille (100) à partir d'un entrepôt (51, 251) d'ensembles homogènes (101) d'éléments en feuille, comprenant les étapes consistant à :
- fournir un chariot de convoyeur (1, 201) capable de se mettre en mouvement le long dudit entrepôt, ledit chariot étant équipé d'un dispositif de saisie (10) pour récupérer un élément en feuille individuel de l'un desdits ensembles homogènes d'éléments en feuille,
**caractérisé en ce qu'**il comprend les étapes consistant à :
- fournir un premier dispositif de transfert de châssis (20) agencé pour charger sur ledit chariot et pour transporter et décharger dudit chariot un châssis de support auxiliaire (30),
- transférer sur ledit chariot de convoyeur un châssis de support auxiliaire (30) au moyen dudit premier dispositif de transfert de châssis,
- récupérer au moins un premier élément en feuille (100a) d'un premier ensemble homogène (101a) d'éléments en feuille positionné dans ledit entrepôt et supporter ledit élément sur ledit châssis de support auxiliaire,
- mettre en mouvement ledit chariot de convoyeur le long dudit entrepôt,
- récupérer au moins un deuxième élément en feuille (100b) d'un deuxième ensemble homogène (101b) d'éléments en feuille, différent dudit premier ensemble, positionné dans ledit entrepôt et supporter ledit élément sur ledit châssis de support auxiliaire, de manière à former un ensemble mixte (102) d'éléments en feuille ;
- mettre en mouvement ledit chariot de convoyeur vers une zone d'expédition (54),
- décharger ledit chariot de convoyeur dudit châssis de support auxiliaire (30) avec ledit ensemble mixte (102) d'éléments en feuille dans ladite zone d'expédition.

15. Procédé selon la revendication 14, dans lequel ledit entrepôt comprend une pluralité de châssis de stockage (52) parallèles les uns aux autres et à une direction de travail (X) et agencés successivement le long d'une direction d'acheminement (Y), lesdits châssis étant mobiles de façon limitée le long de ladite direction d'acheminement (Y), ledit procédé comprenant les étapes consistant à :
- mettre en mouvement des châssis de stockage successifs pour créer un espace entre eux,
- insérer ledit dispositif de saisie (20) dans ledit espace, et
- récupérer ledit premier ou deuxième élément en feuille (100a, 100b) au moyen dudit dispositif de saisie (20).

16. Procédé selon la revendication 14, dans lequel ledit entrepôt comprend une pluralité de châssis de stockage (52) parallèles les uns aux autres et à une direction de travail (X) et agencés successivement le long d'une direction d'acheminement (Y), lesdits châssis étant mobiles le long de ladite direction d'acheminement (X), ledit procédé comprenant les étapes consistant à :
- charger un châssis de stockage (52a) dudit premier ensemble homogène (101a) sur ledit chariot de convoyeur au moyen d'un second dispositif de transfert de châssis (220),
- récupérer ledit premier élément en feuille (100a) dudit premier ensemble homogène au moyen dudit dispositif de saisie,
- décharger ledit châssis de stockage (52a) dudit premier ensemble homogène dudit chariot de convoyeur,
- placer ledit premier élément en feuille (100a) sur ledit châssis de support auxiliaire (30),
- mettre en mouvement le chariot de convoyeur vers un châssis de stockage (52b) dudit deuxième ensemble homogène (101b) et répéter les étapes précédentes afin de récupérer ledit deuxième élément en feuille (100b) et le placer sur ledit châssis de support auxiliaire (30).
